Europäisches Patentamt

European Patent Office

Office européen des brevets

(19)

(11) Publication number : 0 475 774 A2

# (12) EUROPEAN PATENT APPLICATION

(21) Application number : 91308366.3

(22) Date of filing : 12.09.91

(51) Int. Cl.⁵ : F16K 24/04

(30) Priority : 12.09.90 GB 9019917

(43) Date of publication of application :
18.03.92 Bulletin 92/12

(84) Designated Contracting States :
DE FR GB

(72) Inventor : Pardy, Ronald Peter
159 Maldon Road
Tiptree, Essex (GB)

(74) Representative : Messulam, Alec Moses et al
A. Messulam & Co. 24 Broadway
Leigh on Sea Essex SS9 1BN (GB)

(71) Applicant : FORD MOTOR COMPANY LIMITED
Eagle Way
Brentwood Essex (GB)
(84) GB

(71) Applicant : FORD-WERKE
AKTIENGESELLSCHAFT
Werk Köln-Niehl Henry-Ford-Strasse Postfach
60 40 02
W-5000 Köln 60 (DE)
(84) DE

(71) Applicant : FORD FRANCE S. A.
B.P. 307
F-92506 Rueil-Malmaison Cédex (FR)
(84) FR

(54) Valve.

(57)   This valve is constructed so that it opens automatically when the pressure in the passage controlled by the valve exceeds a first threshold value, and then remains open until the pressure drops below a second threshold value, with the second value being much lower than the first. The valve is particularly suitable for use as a vent valve in a motor vehicle fuel tank where the valve will remain closed (to prevent filling of the ullage space) whilst the tank is being filled, but can open and remain open to provide venting when the pressure builds up in the full tank.

EP 0 475 774 A2

Fig. 2.

Jouve, 18, rue Saint-Denis, 75001 PARIS

This invention relates to a valve for controlling flow through a passage, with the valve having the characteristic that it opens to permit flow when a certain pressure exists in the passage, but once open will remain open until the pressure in the passage drops to a level substantially below the opening pressure.

Normally the valve will be designed to control the flow of a gaseous fluid, and the valve will be arranged to operate automatically, ie without any external activation other than the pressure in the flow passage.

According to the present invention, there is provided a valve comprising a valve member movable in a valve housing, the housing having an inlet, a seating surface surrounding the inlet and means biasing the valve member onto the seating surface to close the inlet, the biasing means being arranged so that when a fluid pressure above a threshold value is present at the inlet, the valve member is lifted off the seating surface against the force of the biasing means to open the valve, wherein when the valve is open, the valve member presents a surface to the fluid flow which is substantially larger than the cross-sectional area bounded by the seating surface and wherein the edge of the valve member surface cooperates with a watt of the housing to define a fluid passage through the housing, which passage has a cross-sectional area smaller than the cross-sectional area bounded by the seating surface.

The valve member is preferably biased into a closed position, either by gravity or by spring pressure.

Because of the differential areas of the valve member which are exposed to fluid pressure, the valve will only open against the biasing force when the pressure of the fluid at the inlet is sufficient to overcome the biasing force. However once the valve is open, the pressure will act on the larger area of the valve member surface so that the valve can be held in an open position by a pressure lower than that required to open it. Additionally because of the restriction to flow resulting from the narrow gap between the housing and the valve member edge, the pressure maintained below the valve member will be considerably higher than on the downstream side of the gap. Once the pressure in the inlet drops to a substantially tower level, then the biasing force acting on the valve member will overcome this pressure and close the valve again.

A valve of this type is particularly suitable for use in venting a motor vehicle fuel tank.

In a fuel tank, the highest vapour pressures arise when the tank is filled. It is however desirable that the tank vent valve remain closed during re-fuelling to prevent the ullage space in the tank from being completely filled with fuel. The internal pressures in the tank which will arise during re-fuelling can be readily calculated from hydrostatic information, and the valve can be constructed so that it will remain closed under these pressures. However once refuelling is completed and the filler cap is replaced, then the pressure in the tank may rise further as the fuel temperature increases, and it is then necessary that the vent valve should open, and remain open until the pressure drops substantially.

The valve member is preferably not attached to the housing and moves against a biasing force when the valve opens. The biasing force may be applied by gravity or by spring pressure.

It may be desirable for the dimension of the gap between the valve member and the housing wall to increase as the valve member lifts. This can be achieved by making the housing wall so that it tapers outwardly, by interrupting the housing wall with an outlet passage, or by other means.

Under certain circumstances the pressure on the outlet side of the valve may be greater than the pressure on the inlet side, and to allow air to pass through the valve in the opposite direction (from the outlet to the inlet) a check valve may be included in the valve housing.

The invention will now be further described, by way of example, with reference to the accompanying drawings, in which:

Figure 1 is a cross section through a motor vehicle fuel tank fitted with a valve in accordance with the invention;

Figure 2 is a cross section through a valve in accordance with the invention, in the closed position;

Figure 3 is another cross section through the valve of Figure 2, this time in the open position;

Figures 4, 5 and 6 are views of alternative configurations of the valve in accordance with the invention; and

Figure 7 is a graph showing fuel tank pressure against time between two successive re-fillings of the petrol tank.

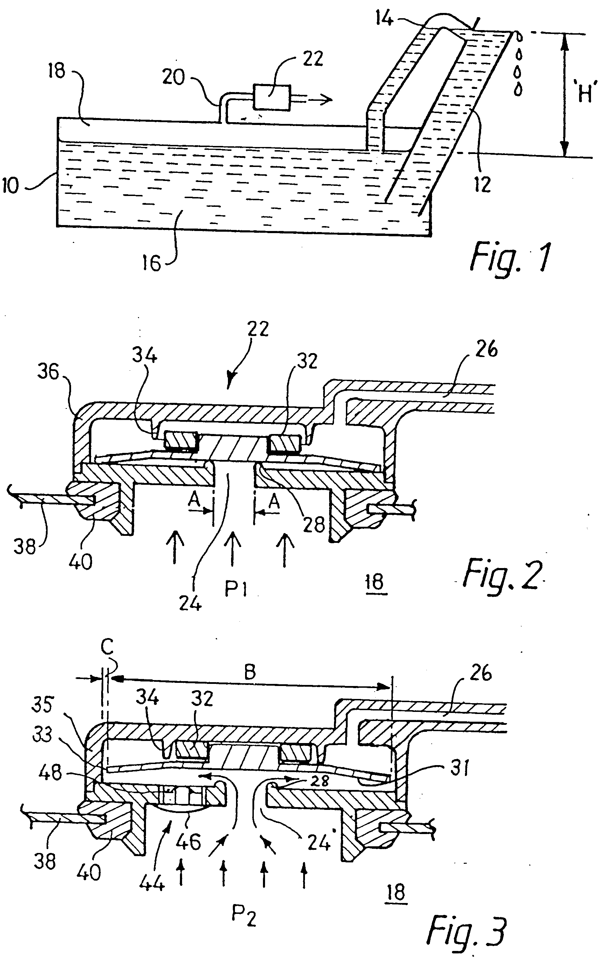

Figure 1 shows a fuel tank 10 with a filler pipe 12 through which the tank will be filled with fuel. The filler pipe enters the tube at a point below the top of the tank, and the level to which the tank can be filled is determined by a sensing tube 14. When the level of the fuel 16 reaches the bottom of the sensing tube, an air space 18 is established and because the air space is vented only to a limited extent, further fuel charged to the filler pipe 12 will just fill the pipe 12 and the sensing tube 14. In the extreme condition, it is possible by trickling fuel into the filter pipe 12 to fill the pipe 12 and the sensing tube 14 to the point where fuel overflows from the pipe 12, and at this point there is a pressure head H acting on the trapped air in the air space 18.

Air is intentionally trapped in the air space 18 to provide an ullage space for the tank so that variations in vapour pressure after the tank has been filled and closed can be accommodated without bursting the tank itself.

In addition to the sensing tube 14, the space 18 is also vented by a vent passage 20 through a vent valve 22.

The valve 22 is shown in more detail in Figures 2 and 3. The valve has an inlet 24 and an outlet 26. A valve seat 28 surrounds the inlet 24, and a valve member 30 sits on the seat 28.

Figure 2 shows the valve in the closed position where a passage from the inlet to the outlet is closed, and Figure 3 shows the valve in the open position where vapour can flow from the inlet 24 to the outlet 26.

The valve member 30 is circular in plan view and has a weight 32 which normally presses the valve member against the seat 28 to keep the valve closed. An annular guidance rib 34 maintains the position of the valve member as it moves up and down.

The valve member is mounted inside a housing 36, and in the embodiments shown in Figures 2 and 3, the lower part of the housing is fitted in the top wall 38 of the fuel tank, with a seal ring 40 between the tank and the valve housing.

When the tank contains fuel, fuel vapour is contained within the ullage space 18 above the fuel level. This fuel vapour produces a pressure $P_1$ which acts through the inlet 24 on the underside of the valve member 30. The area of the valve member exposed to the pressure $P_1$ has a diameter A. When the pressure $P_1$ exceeds a pre-determined level, it will overcome the down force generated by the weight 32, and the valve member 30 will lift to the position shown in Figure 3.

Once the valve lifts, vapour can begin to escape through the outlet 26, but the remaining pressure within the tank now acts on a much larger surface 31 of the valve member 30. Flow through the valve is further restricted by a gap C between the edge 33 of the valve member 30 and the housing wall 35. The total area of this gap (which will be in the configuration of an annular ring) must be teas than the area of the inlet 24, so that the gap represents a restriction to flow through the valve.

When the pressure in the ullage space 18 drops below $P_1$, the pressure may still be sufficient to hold the valve member in its upper position, against the down force generated by the weight 32. The valve will therefore remain open until the pressure in the space 18 drops below a threshold pressure value, $P_2$. Below this pressure the valve will close, and will not re-open until the pressure is built up again to $P_1$.

Figure 3 additionally shows a check valve 44 which has a flexible cover 46 closing vent passages 48. This check valve will normally remain closed, but if the situation should arise when the pressure on the outlet side of the valve 22 is greater than the pressure on the inlet side, and the valve 22 is closed, then the check valve 44 can open to allow the pressures to equalise.

The relationship between $P_1$ and $P_2$ wall depend on the relative areas represented by diameters A and B, on the magnitude of the weight 32 and on the size of the clearance C between the housing internal wall and the edge of the valve member 30. The rate at which the pressure above the valve member will build up to equilibrium with the pressure below will depend upon this clearance between the valve member and the housing.

The relationships between the pressures $P_1$ and $P_2$ can be summed up as follows:
 – if the pressure in the apace 18 is greater than or equal to $P_1$, then the valve opens
 – if the pressure is less than or equal to $P_2$, then the valve closes.

$$P_1 = \frac{W}{\text{area A}}$$

where W is the down force generated by the weight 32, and

$$P_2 = \frac{W}{\text{area B} \times k}$$

where k is a factor determined by the gap C and the housing shape.

The overall objective is to ensure that $P_1 > P_2$.

The valve shown in Figures 2 and 3 is for mounting directly in the top face of a fuel tank. Figure 2 shows on a much smaller scale another embodiment of the valve showing how it can be mounted in-line in a fuel vent passage.

Figure 7 shows graphically the change in pressure in the fuel tank between two re-fuelling operations. It should be noted that the time axis shown in this graph is not linear.

At point a, the filler cap has been removed with the tank substantially empty. The internal space in the tank is therefore at atmospheric pressure. As the tank is filled to the level of the sensing tube 14, the internal tank pressure remains substantially at atmospheric.

When the fuel level reaches the bottom of the sensing tube 14, then the air or vapour in the space 18 is trapped and as the fuel level rises in the filler pipe 12, then a corresponding increase in fuel tank pressure occurs. When the filler pipe 12 is filled to height H, then the pressure reaches c on the graph. The filler cap is replaced at point d and then, under adverse conditions (ie hot weather) a further increase in internal pressure takes place up to point e. The valve 22 is constructed so that the pressure at point e is equal to $P_1$, and at this pressure the valve opens to allow venting.

Thereafter, whilst the vehicle is running and the fuel is being consumed, the internal tank pressure gradually reduces until the point f is reached. The pressure at point f is equal to $P_2$, and therefore the valve closes at this point. Thereafter the tank internal pressure remains substantially constant and drops back to atmospheric as soon as the fitter cap is opened for re-fuelling.

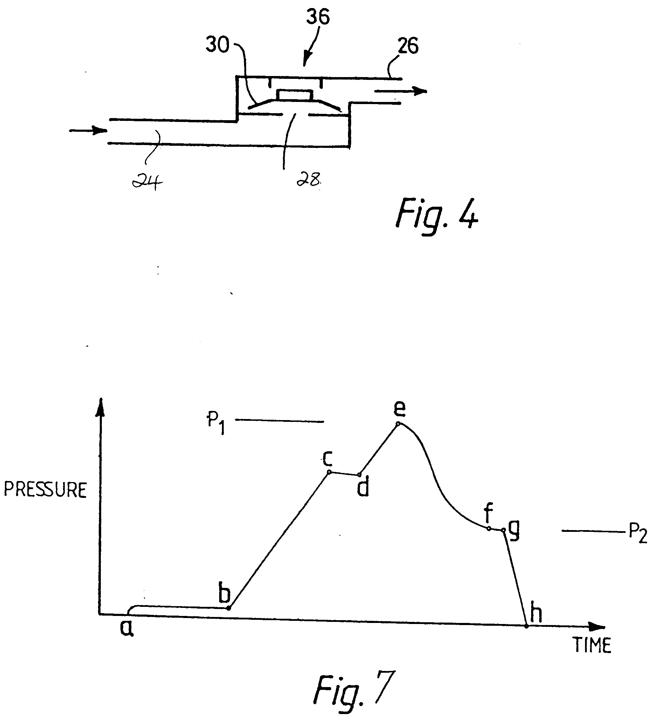

Figure 4 shows an alternative valve configuration where the inlet 24 and the outlet 26 are in line.

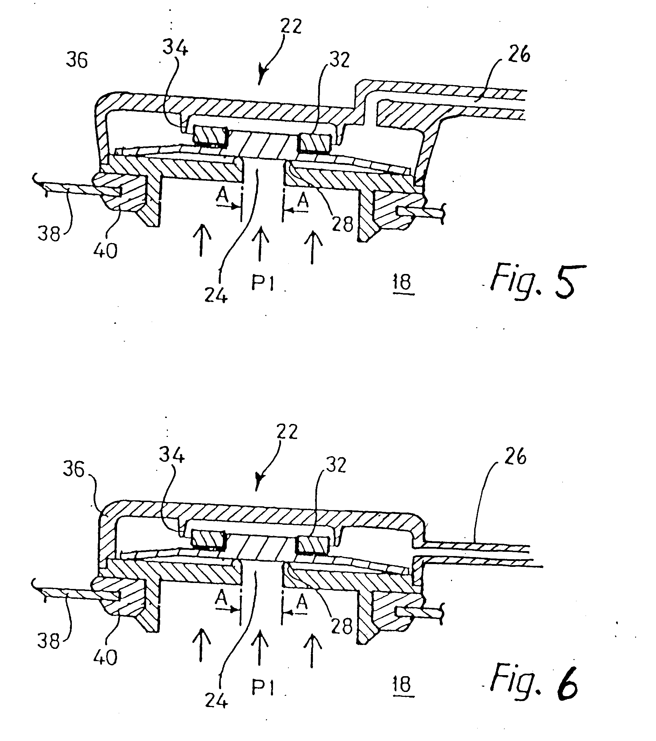

Figure 5 shows a configuration where the housing wall 35 tapers outwardly, so that the size of the gap C increases as the valve lifts. An increase in pressure at $P_2$ will therefore result in variation in the factor k. A similar result can be achieved by locating the outlet passage 26 as shown in Figure 6.

The valve described is very suitable for producing this controlled difference between the opening and closing pressures which allows venting of a motor vehicle fuel tank to follow a desired strategy. The valve is simple to construct. It is fully sealed from the atmosphere and has no vent holes which must be kept free from clogging and has no concerns of diaphragm fatigue.

**Claims**

1. A valve (22) comprising a valve member (30) movable in a valve housing (36), the housing having an inlet (24), a seating surface (28) surrounding the inlet and means (32) biasing the valve member onto the seating surface to close the inlet, the blasing means (32) being arranged so that when a fluid pressure above a threshold value is present at the inlet, the valve member (30) is lifted off the seating surface against the force of the biasing means to open the valve, wherein the edge (33) of the valve member surface cooperates with a wall (35) of the housing to define a normal flow fluid passage (C) through the housing, characterised in that when the valve is open, the valve member presents a surface (31) to the fluid flow which is substantially larger than the cross-sectional area bounded by the seating surface and in that the fluid passage (C) has a total cross-sectional area smaller than the cross-sectional area bounded by the seating surface.

2. A valve as claimed in Claim 1, wherein the valve member (30) is biased into a closed position by gravity.

3. A valve as claimed in Claim 1, wherein the valve member (30) is biased into a closed position by spring force.

4. A valve as claimed in any preceding claim, wherein the total cross-sectional area of the fluid passage (C) increases as the valve member moves away from the seating surface.

5. A valve as claimed in Claim 4, wherein the housing wall (35) tapers outwardly with increasing distance from the seating surface.

6. A valve as claimed in Claim 4, wherein the housing wall is interrupted by an outlet passage at a position above the seating surface.

7. A valve as claimed in any preceding claim, wherein a check valve (46) is included in the valve housing (36) to allow air to pass through the valve in the opposite direction to normal flow.

8. A motor vehicle fuel tank (10) including a valve (22) as claimed in any preceding claim arranged to act as a vent valve at the top of the tank.

*Fig. 1*

*Fig. 2*

*Fig. 3*

*Fig. 4*

*Fig. 7*

Fig. 5

Fig. 6